(19) Europäisches Patentamt
European Patent Office
Office européen des brevets

(11) Veröffentlichungsnummer: **0 198 795 B1**

# (12) EUROPÄISCHE PATENTSCHRIFT

(45) Veröffentlichungstag der Patentschrift: **12.06.91**

(51) Int. Cl.⁵: **C07C 225/34**, C09B 1/20, C09B 1/48, C09B 3/00, C09B 5/00

(21) Anmeldenummer: **86810142.9**

(22) Anmeldetag: **25.03.86**

## (54) Verfahren zur Herstellung von 1,4-Diaminoanthrachinonen.

(30) Priorität: **01.04.85 CH 1399/85**

(43) Veröffentlichungstag der Anmeldung:
**22.10.86 Patentblatt 86/43**

(45) Bekanntmachung des Hinweises auf die Patenterteilung:
**12.06.91 Patentblatt 91/24**

(84) Benannte Vertragsstaaten:
**CH DE FR GB LI**

(56) Entgegenhaltungen:
**DE-A- 3 325 277**
**US-A- 2 207 045**

**CHEMICAL ABSTRACTS, Band 99, Nr. 24, Dezember 1983, Seite 87, Zusammenfassung Nr. 196643y, Columbus, Ohio, US; & JP-A-58 103 345 (SUMITOMO CHEMICAL CO., LTD) 20-06-1983**

(73) Patentinhaber: **CIBA-GEIGY AG**
**Klybeckstrasse 141**
**CH-4002 Basel(CH)**

(72) Erfinder: **Blattner, Rudolf, Dr.**
**Rheinmattenweg 14**
**W-7888 Rheinfelden 4(DE)**

**EP 0 198 795 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von 1,4-Diaminoanthrachinonen durch Oxidation der entsprechenden 2,3-Dihydro-1,4-diaminoanthrachinone.

1,4-Diaminoanthrachinone werden üblicherweise durch Erhitzen der entsprechenden 2,3-Dihydro-1,4-diaminoanthrachinone ("Leuko-1, 4-diaminoanthrachinone") mit Nitrobenzol in Gegenwart geringer Mengen einer organischen Base, wie z.B. Piperidin, bei 130 bis 160 °C hergestellt. Diese Reaktion liefert jedoch das gewünschte 1,4-Diaminoanthrachinon nur in relativ schlechter Ausbeute, da merkliche Mengen 1-Amino-4-hydroxyanthrachinon und 1-Amino-4-anilinoanthrachinon gebildet werden.

Aehnliche Verfahren zur Herstellung von 1,4-Diaminoanthrachinonen werden beispielsweise in US-A-2 207 045 beschrieben.

Obige Nachteile lassen sich nur in unzureichendem Masse vermindern, indem man während der Reaktion ständig einen leichten Strom eines inerten Gases, z.B. Stickstoff, durch die Reaktionsmasse leitet.

Aufgabe der vorliegenden Erfindung war es, ein Verfahren aufzufinden, bei dem die genannten Probleme nicht oder nur in vermindertem Masse auftreten.

Diese Aufgabe wird durch das erfindungsgemässe Verfahren gelöst, indem man die Reaktion bei einer Temperatur von 100 bis 200 °C unter vermindertem Druck, bei dem ein Teil des Nitrobenzols abdestilliert, durchführt. Ueberraschenderweise erhält man die 1,4-Diaminoanthrachinone auf diese Weise in höherer Ausbeute, wobei die Nebenprodukte 1-Amino-4-hydroxyanthrachinon und 1-Amino-4-anilinoanthrachinon in geringerer Menge als bei den üblichen Verfahren gebildet werden. Die erhaltenen 1,4-Diaminoanthrachinone finden entweder als solche Verwendung als Farbstoffe oder dienen als Zwischenprodukte für die Herstellung von Farbstoffen,· z.B. Küpenfarbstoffen. Dank der höheren Reinheit des 1,4-Diaminoanthrachinons besitzen die genannten Farbstoffe verbesserte färberische Eigenschaften, z.B. ist die Anschmutzung von Polyesterfasern geringer.

Gegenstand der vorliegenden Erfindung ist somit ein Verfahren zur Herstellung von 1,4-Diaminoanthrachinonen der Formel (I)

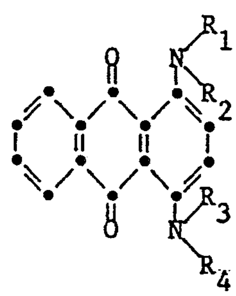

(1) ,

worin $R_1$, $R_2$, $R_3$ und $R_4$ unabhängig voneinander je Wasserstoff, Alkyl oder Aryl bedeuten, durch Oxidation eines 2,3-Dihydro-1,4-diaminoanthrachinons der Formel (2)

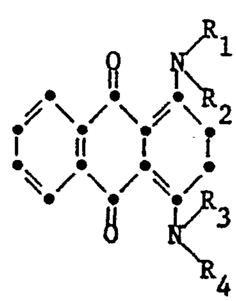

(2) ,

worin $R_1$, $R_2$, $R_3$ und $R_4$ die angegebene Bedeutung aufweisen,
mit Nitrobenzol, dadurch gekennzeichnet, dass man die Reaktion bei einer Temperatur zwischen 100 und 200 °C unter einem Druck durchführt, der gleich oder niedriger ist als der Dampfdruck des Nitrobenzols bei der angewandten Temperatur.

Die Reste $R_1$, $R_2$, $R_3$ und $R_4$ bedeuten unabhängig voneinander Wasserstoff, Alkyl, insbesondere mit 1 bis 12 C-Atomen, wie z.B. Methyl, Ethyl, n-Butyl, iso-Butyl und n-Dodecyl. Der Begriff Alkyl soll im

vorliegenden Fall auch substituiertes Alkyl umfassen, wie z.B. 2-Phenylethyl, 2-Hydroxyethyl, 5-Cyanpentyl, 2-Sulfoethyl oder 3-Dimethylaminopropyl. Ausserdem können $R_1$, $R_2$, $R_3$ und $R_4$ auch gegebenenfalls substituiertes Aryl bedeuten, wie z.B. Phenyl oder Naphthyl, 4-Methylphenyl, 4-Phenoxyphenyl,4-Biphenylyl,2,4,6-Trimethylphenyl oder 4-Acetylaminophenyl.

Vorzugsweise bedeuten $R_1$, $R_2$, $R_3$ und $R_4$ unabhängig voneinander je Wasserstoff, $C_1$-$C_4$-Alkyl, Phenyl oder durch $C_1$-$C_4$-Alkyl, Phenoxy, $C_1$-$C_4$-Alkylcarbonyl oder Phenyl substituiertes Phenyl.

Im erfindungsgemässen Verfahren werden bevorzugt solche Verbindungen der Formel (2) eingesetzt, bei denen

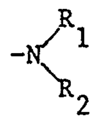

und

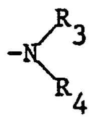

identisch sind und unter diesen vor allem diejenigen, die sich von primären Aminen ableiten, d.h. solche, bei denen $R_1$ und $R_3$ Wasserstoff bedeuten.

Besonders geeignet ist das erfindungsgemässe Verfahren zur Herstellung der Verbindung der Formel (1), worin $R_1$, $R_2$, $R_3$ und $R_4$ je Wasserstoff darstellen.

Das erfindungsgemässe Verfahren wird beispielsweise wie folgt durchgeführt:
Man löst oder suspendiert eine Verbindung der Formel (2) in der drei-bis vierfachen Gewichtsmenge Nitrobenzol. Anschliessend setzt man vorzugsweise katalytische Mengen einer organischen Base, insbesondere Piperidin, Collidin oder Di-n-butylamin, sowie einer anorganischen basischen Verbindung, insbesondere Natrium- oder Kaliumcarbonat oder -bicarbonat, zu.

Die Mengen an organischer Base sowie an anorganischer basischer Verbindung entsprechen den Mengen, die üblicherweise bei der Oxidation von Verbindungen der Formel (2) mit Nitrobenzol eingesetzt werden.

Anschliessend heizt man die Reaktionsmischung auf 100 bis 200 °C auf. Es hat sich als günstig erwiesen, wenn zu Beginn des Aufheizens ein Druck von $<100$ mbar gewählt wird und dieser mit steigender Temperatur allmählich erhöht wird. Nach Erreichen der Reaktionstemperatur, welche vorzugsweise zwischen 130 und 160 °C liegt, wird der Druck dann so geregelt, dass die Reaktionsmischung siedet und ein Teil des Nitrobenzols abdestilliert. Der Druck ist also gleich oder niedriger als der Dampfdruck des Nitrobenzols bei der angewandten Temperatur.

Mit dem Nitrobenzol destillieren Wasser und Anilin ab. Vorzugsweise destilliert man während der Reaktion 3 bis 20 Mol, insbesondere 5 bis 15 Mol Nitrobenzol pro Mol Verbindung der Formel (2) ab.

Die Reaktionszeit hängt von den Reaktionsbedingungen, z.B. der Temperatur ab. Vorzugsweise führt man die Reaktion während 2 bis 5 Stunden bei 145 bis 160 °C, insbesondere 150 bis 155 °C durch.

Das erhaltene 1,4-Diaminoanthrachinon kann auf übliche Weise isoliert werden, z.B. indem man durch Wasserdampfdestillation das Nitrobenzol entfernt, anschliessend filtriert und den Filterrückstand trocknet.

Die nach dem Verfahren erhaltenen 1,4-Diaminoanthrachinone finden als Farbstoffe Verwendung oder können als Ausgangsstoffe für weitere Umsetzungen, z.B. zur Herstellung von weiteren Zwischenprodukten der Anthrachinonreihe, wie beispielsweise sulfonierten oder benzoylierten 1,4-Diaminoanthrachinonen sowie zur Herstellung von Anthrimiden und Küpenfarbstoffen dienen.

Eine bevorzugte Variante des erfindungsgemässen Verfahrens besteht darin, dass man das erhaltene 1,4-Diaminoanthrachinon ohne es zu isolieren, anschliessend mit einer aromatischen, vorzugsweise anthrachinoiden Halogenverbindung zum Anthrimid kondensiert, wobei man die erhaltene Suspension des 1,4-Diaminoanthrachinons und die Halogenverbindung sehr rasch, d.h. innerhalb von weniger als 10 Minuten, vorzugsweise innerhalb von weniger als 1 Minute und insbesondere innerhalb von höchsten 10 Sekunden, auf Reaktionstemperatur erhitzt. Vorzugsweise geht man so vor, dass man die Halogenverbindung zu der Suspension des 1,4-Diaminoanthrachinons gibt und diese Mischung zu Nitrobenzol zudosiert, welches auf die Reaktionstemperatur für die Anthrimidbildung erhitzt wurde.

Diese Variante ist selbstverständlich nur mit solchen 1,4-Diaminoanthrachinonen durchführbar, welche mindestens eine primäre oder sekundäre Aminogruppe besitzen.

Die Reaktionstemperatur für die Anthrimidbildung liegt vorzugsweise zwischen 180 und 220 °C, insbesondere zwischen 195 und 215 °C. Die Edukte, 1,4-Diaminoanthrachinon und aromatische Halogenverbindung, können über getrennte Zuführungen zu dem Nitrobenzol, welches sich auf Reaktionstemperatur befindet, zugegeben werden. Vorzugsweise setzt man jedoch die aromatische Halogenverbindung der erhaltenen Suspension des 1,4-Diaminoanthrachinons zu und dosiert dann die erhaltene Mischung zu dem

erhitzten Nitrobenzol.

Die Kondensationsreaktion erfolgt in Gegenwart eines basischen Mittels und eines Kupferkatalysators. Der Kupferkatalysator und die basische Verbindung können in dem Teil des Nitrobenzols, das auf Reaktionstemperatur erhitzt wurde, enthalten sein oder sie können zusammen mit den Edukten zudosiert werden.

Vorzugsweise sind 5 bis 30 Gew.% dieser Komponenten in dem auf Reaktionstemperatur erhitzten Nitrobenzol und der Rest wird zusammen mit den Edukten zudosiert, wobei die basische Verbindung auch schon bei der Synthese des 1,4-Diaminoanthrachinons in entsprechend grösserer Menge zugesetzt werden kann, so dass sie in der erhaltenen Reaktionsmasse enthalten ist.

Als aromatische Halogenverbindungen kommen solche in Frage, bei denen das Halogen direkt an den aromatischen Kern gebunden ist. Säurehalogenide von Aromaten oder Verbindungen, die sich ähnlich wie Säurehalogenide verhalten, wie z.B. Cyanurchlorid, sind nicht als aromatische Halogenverbindungen zu verstehen.

Besonders geeignet unter diesen sind halogenierte, gegebenenfalls noch durch weitere bei Küpenfarbstoffen übliche Substituenten substituiertes Anthrachinon, Benzanthron, Anthanthron, Pyranthron, Dibenzanthron, Phthaloylacridon, Flavanthron, Dibenzpyrenchinon oder Isoviolanthron.

Besonders gute Ergebnisse im erfindungsgemässen Verfahren werden erhalten, wenn man chloriertes oder bromiertes, gegebenenfalls durch Benzoylamino substituiertes Anthrachinon, Benzanthron, Anthanthron, Pyranthron oder Dibenzanthron verwendet.

Die Halogenverbindung und die verküpbare Aminoverbindung werden im allgemeinen in etwa stöchiometrischen Mengen eingesetzt, ein Ueberschuss von z.B. 10% an einer der Komponenten ist jedoch ebenfalls möglich.

Als Kupferkatalysatoren kommen metallisches Kupfer sowie Kupferverbin dungen, wie z.B. Kupferoxid oder Kupfer-I-chlorid in Frage. Bevorzugt ist Kupfer sowie vor allem Kupfer-I-chlorid.

Geeignete basische Mittel sind beispielsweise Natriumhydrogencarbonat, Kaliumhydrogencarbonat, Natriumacetat, Kaliumacetat, Natriumcarbonat und Kaliumcarbonat sowie auch Mischungen dieser Verbindungen.

Die erforderliche Menge an Kupferkatalysator liegt dabei im allgemeinen zwischen 0,1 bis 1 Gew.%, bezogen auf gebildetes Anthrimid.

Nach der Kondensationsreaktion werden die Anthrachinonimidverbindungen auf übliche Art und Weise isoliert, beispielsweise indem man das Nitrobenzol durch Wasserdampfdestillation entfernt, danach das Kondensationsprodukt abfiltriert und trocknet.

Die erhaltenen Anthrachinonimidverbindungen sind meist Farbstoff-Zwischenprodukte; sie ergeben nach der Ueberführung in Carbazol- oder Acridin-Derivate Küpenfarbstoffe, die Verwendung finden zum Färben und Bedrucken von Textilmaterialien wie z.B. Baumwolle.

Die folgenden Beispiele dienen der Erläuterung der Erfindung, ohne sie darauf zu beschränken. Die Temperaturangaben beziehen sich auf Grad Celsius und Prozente bedeuten Gewichtsprozente.

Beispiel 1

60 g 2,3-Dihydro-1,4-diaminoanthrachinon (Gehalt 92 %, enthaltend 1,5 % 1,4-Diaminoanthrachinon), 10 g Natriumcarbonat (Soda) und 0,4 ml Piperidin werden in 350 ml Nitrobenzol gegeben. Dann wird ein Vakuum von ca. 230 mbar angelegt und anschliessend auf 150° C erhitzt. Das Vakuum wird dabei so geregelt, dass die Siedetemperatur der Reaktionsmasse zwischen 150 und 155° C gehalten werden kann. Während der Aufheizphase wird evtl. vorhandenes Wasser abdestilliert. Man hält die Temperatur während 3 Stunden bei 150 bis 155° C und reguliert die Heizleistung so, dass während Zeit 170 bis 200 ml Nitrobenzol, enthaltend Wasser und Anilin, abdestilliert. Anschliessend versetzt man mit 170 ml Nitrobenzol und destilliert während weiterer 2 Stunden unter den gleichen Bedingungen weitere 170 ml Nitrobenzol ab. Die Reaktionsmasse wird anschliessend durch Wasserdampfdestillation vom Nitrobenzol befreit. Nach Filtration und Trocknung erhält man 59,5 g eines violetten Pulvers, enthaltend 91% 1,4-Diaminoanthrachinon, 0,4% 1-Amino-4-hydroxyanthrachinon und 0,3% 1-Amino-4-anilinoanthrachinon.

Vergleichsbeispiele

a) Arbeitet man genau wie im Beispiel 1 beschrieben, jedoch bei Normaldruck, so erhält man nach der gleichen Aufarbeitung 59,5 g eines violetten Pulvers, enthaltend 82% 1,4-Diaminoanthrachinon, 7,5% 1-Amino-4-hydroxyanthrachinon und 2,1% 1-Amino-4-anilinoanthrachinon.

b) Arbeitet man genau wie im Beispiel 1 beschrieben, jedoch bei Normaldruck unter Durchleiten von

Stickstoff, so erhält man nach der gleichen Aufarbeitung 59,5 g eines violetten Pulvers, enthaltend 87 % 1,4-Diaminoanthrachinon, 4 % 1-Amino-4-hydroxyanthrachinon und 1 % 1-Amino-4-anilinoanthrachinon.

Beispiel 2

Man arbeitet wie im Beispiel 1 beschrieben, verwendet jedoch die nach Beendigung der Reaktion erhaltene Lösung von 1,4-Diaminoanthrachinon ohne dessen Isolierung direkt weiter zur Herstellung von Trianthrimid. Dazu versetzt man die Reaktionsmasse, welche ein Volumen von ca. 180 ml aufweist und 54,1 g 1,4-Diaminoanthrachinon enthält, mit 116 g 1-Chloranthrachinon (99%ig), 50 g Soda, 1,5 g Kupfer-I-chlorid sowie 320 ml Nitrobenzol.

Die erhaltene Suspension wird innerhalb von 1,5 Stunden zu einer siedenden Suspension von 50 ml Nitrobenzol, 10 g Soda und 0,5 g Kupferchlorid so zudosiert, dass ein ständiges Sieden (210 bis 215 °C, leichte Destillation) aufrecht erhalten werden kann. Nach einer Reaktionszeit von weiteren 2,5 Stunden bei dieser Temperatur ist die Umsetzung beendet und die Reaktionsmasse kann wie üblich aufgearbeitet werden (Wasserdampfdestillation, Filtration oder Trocknung aus Nitrobenzol in einem Venuleth unter Vakuum). Nach der Trocknung aus Nitrobenzol kann zur Entfernung der Salze in Wasser angeschlämmt und danach filtriert werden.

Ausbeute: 225 g Trianthrimid (salzhaltige Ware) oder 170 g nach Entsalzung und Trocknung.

Beispiel 3

Man arbeitet wie in Beispiel 1 beschrieben, erhitzt jedoch auf 165 °C und regelt das Vakuum auf ca. 305 mbar ein. Nach einer Reaktionszeit von 1,5 Stunden und einer Destillationszeit von 1 Stunde ergeben sich 59,5 g eines Produkts, welches 89% 1,4-Diaminoanthrachinon, 1,1% 1-Amino-4-hydroxyanthrachinon und 1,4% 1-Amino-4-anilinoanthrachinon enthält.

Beispiel 4

Man arbeitet wie unter Beispiel 1 beschrieben, die Reaktionstemperatur beträgt jedoch 140 °C und die Vakuumregelung erfolgt bei ca. 130 mbar. Nach einer Reaktionszeit von 5 Stunden und einer Destillationszeit von 3 Stunden ergeben sich 59,5 g eines violetten Pulvers, dessen Qualität mit der des Produkts gemäss Beispiel 1 übereinstimmt.

Beispiel 5

Man arbeitet wie unter Beispiel 1 beschrieben, setzt jedoch schon zu Beginn die Gesamtmenge von 520 ml Nitrobenzol ein und destilliert während der vierstündigen Reaktionszeit 340 ml Nitrobenzol bei einer Temperatur von 150 bis 155 °C und einem Druck von ca.230 mbar ab. Eine weitere Nitrobenzol-Zugabe und anschliessende erneute Destillation entfallen. Die so erhaltene Reaktionsmasse kann gemäss Beispiel 2 direkt zur Herstellung von weiteren Zwischenprodukten der Anthrachinonreihe eingesetzt werden.

Arbeitet man die Reaktionsmasse auf, so erhält man 59,5 g eines violetten Pulvers, dessen Qualität mit der des Produkts gemäss Beispiel 1 übereinstimmt.

## Ansprüche

**1.** Verfahren zur Herstellung von 1,4-Diaminoanthrachinonen der Formel (1)

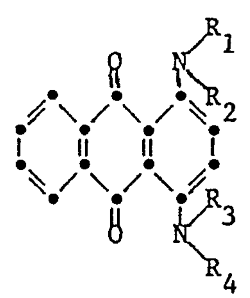

(1) ,

worin $R_1$, $R_2$, $R_3$ und $R_4$ unabhängig voneinander je Wasserstoff, Alkyl oder Aryl bedeuten, durch Oxidation eines 2,3-Dihydro-1,4-diaminoanthrachinons der Formel (2)

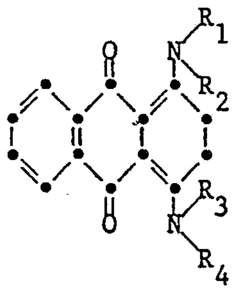

(2) ,

worin $R_1$, $R_2$, $R_3$ und $R_4$ die angegebene Bedeutung aufweisen, mit Nitrobenzol, dadurch gekennzeichnet, dass man die Reaktion bei einer Temperatur zwischen 100 und 200 °C unter einem Druck durchführt, der gleich oder niedriger ist als der Dampfdruck des Nitrobenzols bei der angewandten Temperatur.

**2.** Verfahren gemäss Anspruch 1, dadurch gekennzeichnet, dass man von einer Verbindung der Formel (2) ausgeht, worin $R_1$, $R_2$, $R_3$ und $R_4$ unabhängig voneinander je Wasserstoff, $C_1$-$C_4$-Alkyl, Phenyl oder durch $C_1$-$C_4$-Alkyl, Phenoxy, $C_1$-$C_4$-Alkylcarbonyl, oder Phenyl substituiertes Phenyl bedeuten.

**3.** Verfahren gemäss Anspruch 1 oder 2, dadurch gekennzeichnet, dass man von einer Verbindung der Formel (2) ausgeht, worin

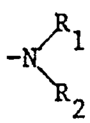

und

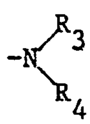

identisch sind.

**4.** Verfahren gemäss einem der Ansprüche 1 bis 3, dadurch gekennzeichnet, dass man von einer Verbindung der Formel (2) ausgeht, worin $R_1$ und $R_3$ Wasserstoff bedeuten.

**5.** Verfahren gemäss Anspruch 4, dadurch gekennzeichnet, dass man von einer Verbindung der Formel (2) ausgeht, worin $R_1$, $R_2$, $R_3$ und $R_4$ je Wasserstoff bedeuten.

**6.** Verfahren gemäss einem der Ansprüche 1 bis 5, dadurch gekennzeichnet, dass man bei einer Temperatur von 130 bis 160 °C arbeitet.

**7.** Verfahren gemäss einem der Ansprüche 1 bis 6, dadurch gekennzeichnet, dass man während der Reaktion 3 bis 20 Mol Nitrobenzol pro Mol Verbindung der Formel (2) abdestilliert.

**8.** Verfahren gemäss Anspruch 7, dadurch gekennzeichnet, dass man 5 bis 15 Mol Nitrobenzol pro Mol Verbindung der Formel (2) abdestilliert.

**9.** Verfahren gemäss einem der Ansprüche 1 bis 8, dadurch gekennzeichnet, dass man die Reaktion während 2 bis 5 Stunden bei 145 bis 160 °C, insbesondere 150 bis 155 °C, durchführt.

**10.** Verfahren gemäss einem der Ansprüche 1 bis 9, dadurch gekennzeichnet, dass man die Reaktion in Gegenwart einer organischen Base durchführt.

**11.** Verfahren gemäss Anspruch 10, dadurch gekennzeichnet, dass man als organische Base Piperidin, Collidin oder Di-n-butylamin verwendet.

**12.** Verfahren gemäss einem der Ansprüche 1 bis 11, dadurch gekennzeichnet, dass man die Reaktion in Gegenwart einer anorganischen basischen Verbindung durchführt.

**13.** Verfahren gemäss Anspruch 12, dadurch gekennzeichnet, dass man als anorganische basische Verbindung Natrium- oder Kaliumcarbonat oder -bicarbonat verwendet.

**14.** Verfahren zur Herstellung von Anthrachinonimidverbindungen, dadurch gekennzeichnet, dass man ein 2,3-Dihydro-l,4-diaminoanthrachinon der Formel

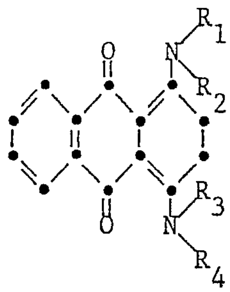

(2) ,

worin $R_1$ Wasserstoff und $R_2$, $R_3$ und $R_4$ unabhängig voneinander je Wasserstoff, Alkyl oder Aryl bedeuten, mit Nitrobenzol oxidiert, wobei man die Reaktion bei einer Temperatur zwischen 100 und 200 – C unter einem Druck durchführt, der gleich oder niedriger ist als der Dampfdruck des Nitrobenzols bei der angewandten Temperatur, und dass man das erhaltene 1,4-Diaminoanthrachinon, ohne es zu isolieren, anschliessend mit einer aromatischen Halogenverbindung zum Anthrimid kondensiert, indem man die erhaltene Suspension des 1,4-Diaminoanthrachinons und die Halogenverbindung sehr rasch auf Reaktionstemperatur erhitzt.

**15.** Verfahren gemäss Anspruch 14, dadurch gekennzeichnet, dass man die Kondensation für die Anthrimidbildung bei einer Temperatur von 180 bis 220 °C, vorzugsweise von 195 bis 2l5 °C durchführt.

**16.** Verfahren gemäss einem der Ansprüche 14 oder 15, dadurch gekennzeichnet, dass man die aromatische Halogenverbindung zu der erhaltenen Suspension des 1,4-Diaminoanthrachinons zugibt und dann die erhaltene Mischung zu Nitrobenzol zudosiert, welches auf die Reaktionstemperatur für die Anthrimidbildung erhitzt wurde.

**17.** Verfahren gemäss Anspruch 16, dadurch gekennzeichnet, dass 5 bis 30 Gew.% des basischen Mittels und des Kupferkatalysators in dem auf Reaktionstemperatur erhitzten Nitrobenzol sind und der Rest zusammen mit den Edukten zudosiert wird.

**18.** Verfahren gemäss einem der Ansprüche 14 bis 17, dadurch gekennzeichnet, dass man als Halogenverbindung ein halogeniertes, gegebenenfalls noch durch weitere bei Küpenfarbstoffen übliche Substituenten substituiertes Anthrachinon, Benzanthron, Anthanthron, Pyranthron, Dibenzanthron, Phthaloylacridon, Flavanthron, Dibenzpyrenchinon oder Isoviolanthron verwendet.

**19.** Verfahren gemäss Anspruch 18, dadurch gekennzeichnet, dass man chloriertes oder bromiertes Anthrachinon, Benzanthron, Anthanthron, Pyranthron oder Dibenzanthron verwendet.

## Claims

**1.** A process for the preparation of a 1,4-diaminoanthraquinone of formula (1)

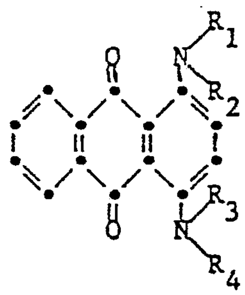

(1)

in which each of $R_1$, $R_2$, $R_3$ and $R_4$ independently of one another is hydrogen, alkyl or aryl, by oxidation of a 2,3-dihydro-1,4-diaminoanthraquinone of formula (2)

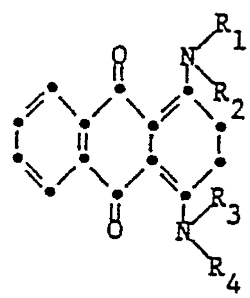

(2)

in which $R_1$, $R_2$, $R_3$ and $R_4$ are as defined above, with nitrobenzene, which process comprises carrying out the reaction at a temperature between 100 and 200°C under a pressure which is the same as or lower than the vapour pressure of the nitrobenzene at the temperature applied.

2. A process according to claim 1, which comprises starting from a compound of formula (2), in which each of $R_1$, $R_2$, $R_3$ and $R_4$ independently of one another is hydrogen, $C_1$-$C_4$alkyl, phenyl or phenyl substituted by $C_1$-$C_4$alkyl, phenoxy, $C_1$-$C_4$alkylcarbonyl or phenyl.

3. A process according to either of claims 1 or 2, which comprises starting from a compound of formula (2), in which

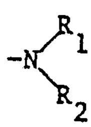

and

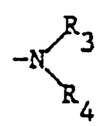

are identical.

4. A process according to any one of claims 1 to 3, which comprises starting from a compound of formula (2), in which $R_1$ and $R_3$ are hydrogen.

5. A process according to claim 4, which comprises starting from a compound of formula (2), in which each of $R_1$, $R_2$, $R_3$ and $R_4$ is hydrogen.

6. A process according to any one of claims 1 to 5, which comprises carrying out the reaction at a temperature of from 130 to 160°C.

7. A process according to any one of claims 1 to 6, which comprises distilling off 3 to 20 moles of nitrobenzene per mole of compound of formula (2) during the reaction.

8. A process according to claim 7, which comprises distilling off 5 to 15 moles of nitrobenzene per mole of compound of formula (2).

**9.** A process according to any one of claims 1 to 8, which comprises carrying out the reaction for 2 to 5 hours at 145 to 160° C, in particular 150 to 155° C.

**10.** A process according to any one of claims 1 to 9, which comprises carrying out the reaction in the presence of an organic base.

**11.** A process according to claim 10, wherein the organic base used is piperidine, collidine or di-n-butylamine.

**12.** A process according to any one of claims 1 to 11, which comprises carrying out the reaction in the presence of an inorganic basic compound.

**13.** A process according to claim 12, wherein the inorganic basic compound is sodium carbonate, potassium carbonate, sodium bicarbonate or potassium bicarbonate.

**14.** A process for the preparation of an anthraquinone imide compound, which process comprises oxidising a 2,3-dihydro-1,4-diaminoanthraquinone of formula

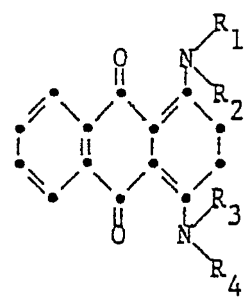

(2)

in which $R_1$ is hydrogen and each of $R_2$, $R_3$ and $R_4$ independently of one another is hydrogen, alkyl or aryl, with nitrobenzene, the reaction being carried out at a temperature between 100 and 200° C under a pressure which is the same as or lower than the vapour pressure of the nitrobenzene at the temperature applied, and subsequently condensing the resultant 1,4-diaminoanthraquinone, without isolating it, with an aromatic halogen compound to give the anthrimide, the condensation being effected by heating the resultant suspension of the 1,4-diaminoanthraquinone and the halogen compound very rapidly to the reaction temperature.

**15.** A process according to claim 14, wherein the condensation for the anthrimide formation is carried out at a temperature of from 180 to 220° C, preferably from 195 to 215° C.

**16.** A process according to either of claims 14 or 15, which comprises adding the aromatic halogen compound to the resultant suspension of the 1,4-diaminoanthraquinone and then metering the resultant mixture into nitrobenzene which has been heated to the reaction temperature for the anthrimide formation.

**17.** A process according to claim 16, wherein 5 to 30 % by weight of the base and the copper catalyst are in the nitrobenzene which has been heated to the reaction temperature and the remainder is metered in together with the educts.

**18.** A process according to any one of claims 14 to 17, wherein the halogen compound used is a halogenated anthraquinone, benzanthrone, anthanthrone, pyranthrone, dibenzanthrone, phthaloylacridone, flavanthrone, dibenzpyrenequinone or isoviolanthrone, which compounds may be further substituted by customary substituents of vat dyes.

**19.** A process according to claim 18, which comprises the use of chlorinated or brominated anthraquinone, benzanthrone, anthanthrone, pyranthrone or dibenzanthrone.

## Revendications

1. Procédé pour la préparation de 1,4-diaminoanthraquinones de formule (1)

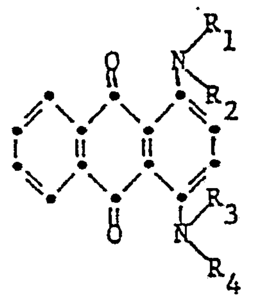

(1) ,

dans laquelle $R_1$, $R_2$, $R_3$ et $R_4$ représentent chacun, indépendamment les uns des autres, un groupe alkyle ou aryle ou un atome d'hydrogène, par oxydation d'une 2,3-dihydro-1,4-diaminoanthraquinone de formule (2)

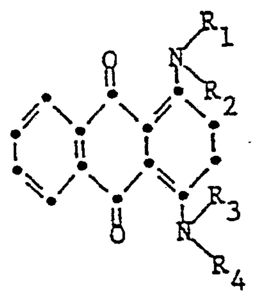

(2) ,

dans laquelle $R_1$, $R_2$, $R_3$ et $R_4$ ont les significations données, avec le nitrobenzène, caractérisé en ce que l'on effectue la réaction à une température entre 100 et 200 °C et sous une pression qui est égale ou inférieure à la tension de vapeur du nitrobenzène à la température utilisée.

2. Procédé selon la revendication 1, caractérisé en ce que l'on part d'un composé de formule (2) dans lequel $R_1$, $R_2$, $R_3$ et $R_4$ représentent chacun, indépendamment les uns des autres, un atome d'hydrogène ou un radical alkyle en $C_1$-$C_4$, phényle ou phényle substitué par un groupe alkyle en $C_1$-$C_4$, phénoxy, alkyl($C_1$-$C_4$)-carbonyle ou phényle.

3. Procédé selon la revendication 1 ou 2, caractérisé en ce que l'on part d'un composé de formule (2) dans lequel

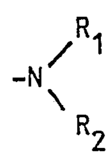 et 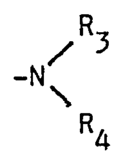

sont identiques.

4. Procédé selon l'une des revendications 1 à 3, caractérisé en ce que l'on part d'un composé de formule (2) dans lequel $R_1$ et $R_3$ représentent des atomes d'hydrogène.

5. Procédé selon la revendication 4, caractérisé en ce que l'on part d'un composé de formule (2) dans lequel $R_1$, $R_2$, $R_3$ et $R_4$ représentent chacun un atome d'hydrogène.

6. Procédé selon l'une des revendications 1 à 5, caractérisé en ce que l'on opère à une température de

130 à 160°C.

**7.** Procédé selon l'une des revendications 1 à 6, caractérisé en ce que, pendant la réaction, on élimine par distillation de 3 à 20 moles de nitrobenzène par mole de composé de formule (2).

**8.** Procédé selon la revendication 7, caractérisé en ce que l'on élimine par distillation de 5 à 15 moles de nitrobenzène par mole de composé de formule (2).

**9.** Procédé selon l'une des revendications 1 à 8, caractérisé en ce que l'on effectue la réaction pendant 2 à 5 heures à 145-160°C, en particulier à 150-155°C.

**10.** Procédé selon l'une des revendications 1 à 9, caractérisé en ce que l'on effectue la réaction en présence d'une base organique.

**11.** Procédé selon la revendication 10, caractérisé en ce que l'on utilise en tant que base organique la pipéridine, la collidine ou la di-n-butylamine.

**12.** Procédé selon l'une des revendications 1 à 11, caractérisé en ce que l'on effectue la réaction en présence d'un composé basique inorganique.

**13.** Procédé selon la revendication 12, caractérisé en ce que l'on utilise en tant que composé basique inorganique le carbonate ou bicarbonate de sodium ou de potassium.

**14.** Procédé pour la préparation de composés anthraquinonimidiques, caractérisé en ce que l'on oxyde avec le nitrobenzène une 2,3-dihydro-1,4-diaminoanthraquinone de formule

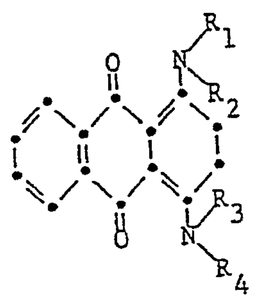

(2) ,

dans laquelle $R_1$ représente un atome d'hydrogène, et $R_2$, $R_3$ et $R_4$ représentent chacun, indépendamment les uns des autres, un atome d'hydrogène ou un groupe alkyle ou aryle, en effectuant la réaction à une température entre 100 et 200°C, sous une pression qui est égale ou supérieure à la tension de vapeur du nitrobenzène à la température utilisée, et en ce que l'on condense ensuite la 1,4-diaminoanthraquinone obtenue, sans l'isoler, avec un composé halogéné aromatique, pour aboutir à l'anthrimide, en portant très rapidement à la température de la réaction la suspension obtenue de la 1,4-diaminoanthraquinone et le composé halogéné.

**15.** Procédé selon la revendication 14, caractérisé en ce que l'on effectue la condensation pour la formation de l'anthrimide à une température de 180 à 220°C, de préférence de 195 à 215°C.

**16.** Procédé selon la revendication 14 ou 15, caractérisé en ce que l'on ajoute le composé halogéné aromatique à la suspension obtenue de la 1,4-diaminoanthraquinone, et ensuite on ajoute de façon réglée le mélange obtenu au nitrobenzène qui a été porté à la température de réaction pour la formation de l'anthrimide.

**17.** Procédé selon la revendication 16, caractérisé en ce que de 5 à 30 % en poids de la substance basique et du catalyseur à base de cuivre sont présents dans le nitrobenzène chauffé à la température de la réaction, et le reste est introduit de façon réglée avec les produits de départ.

**18.** Procédé selon l'une des revendications 14 à 17, caractérisé en ce que l'on utilise en tant que composé

halogéné une anthraquinone, benzanthrone, anthanthrone, pyranthrone, dibenzanthrone, phtaloylacridone, flavanthrone, dibenzopyrènequinone ou isoviolanthrone halogénée, éventuellement portant d'autres substituants usuels dans les colorants de cuve.

**19.** Procédé selon la revendication 18, caractérisé en ce que l'on utilise l'anthraquinone, la benzanthrone, l'anthanthrone, la pyranthrone ou la dibenzanthrone, chlorée ou bromée.